# EUROPÄISCHE PATENTANMELDUNG

(11) **EP 1 510 983 A1**
(43) Veröffentlichungstag der Anmeldung: **02.03.2005**
(21) Anmeldenummer: 03019268.6
(22) Anmeldetag: 26.08.2003
(51) Int. Cl.: G07F 19/00, G06F 17/60, H04M 15/00

(54) **Zahlungsplattform für Netzwerkbetreiber und Telekommunikationsendgeräte zur Realisierung eines elektronischen Zahlungsverkehrs sowie zugehörige Verfahren**

(71) Anmelder: SIEMENS AKTIENGESELLSCHAFT, 80333 München (DE)
(72) Erfinder: Bitterlich, Jean-Yves, 81549 München (DE)

(57) **Zusammenfassung**

Die Erfindung betrifft eine Zahlungsplattform für Netzwerkbetreiber (O) und Telekommunikationsendgeräte (A, B) zur Realisierung eines elektronischen Zahlungsverkehrs sowie zugehörige Verfahren, wobei zumindest einer Service-Rufnummerneinheit (SN1 bis SNx) eine Service-Rufnummer zugeordnet ist, bei deren Anwahl ein Zahlungstransfer in Höhe eines zugeordneten Buchungswertes veranlasst wird. Eine Zahlungstransfer-Erfassungseinheit (1) erfasst realisierte Verbindungen zu den jeweiligen Service-Rufnummern sowie eine den Verbindungsaufbau verursachende Teilnehmer-Rufnummer (TelNrA). Eine Konten-Datenbank (3) speichert Kontenstände für eine Vielzahl von Teilnehmer-Rufnummern des Netzwerkbetreibers (O), wobei eine Buchungseinheit (2) eine Buchung in der Konten-Datenbank (3) derart durchführt, wobei die den Verbindungsaufbau verursachende Teilnehmer-Rufnummer (TelNrA) als Zahlungs-Ursprungsadresse und ein Inhalt (TelNrB) der an die Service-Rufnummer gesendeten Nachricht als Zahlungs-Zieladresse verwendet sowie ein Buchungswert aus der angewählten Service-Rufnummer abgeleitet wird.

## Beschreibung

Die vorliegende Erfindung bezieht sich auf eine Zahlungsplattform für Netzwerkbetreiber und Telekommunikationsendgeräte zur Realisierung eines elektronischen Zahlungsverkehrs sowie zugehörige Verfahren und insbesondere auf eine Zahlungsplattform für Handy-Netzwerkbetreiber und Handys zur Realisierung eines elektronischen Zahlungsverkehrs mittels SMS-Nachrichten.

Zur Realisierung eines Zahlungsverkehrs sind eine Vielzahl von Überweisungsmöglichkeiten bekannt wie beispielsweise das Ausstellen eines Schecks, die Verwendung von Geschenkgutscheinen über einen vorbestimmten Betrag für ein vorbestimmtes Geschäft, die Geldüberweisung von einem Bankkonto auf ein anderes Bankkonto oder die Verwendung von Bargeld.

Hinsichtlich des elektronischen Zahlungsverkehrs bestehen darüber hinaus die Möglichkeiten der Zahlung mittels Kreditkarte, einer Bankkarte, einer Kundenkarte oder elektronischem Bargeld. Üblicherweise ist hierbei jedoch immer eine Registrierung erforderlich.

Aus der Druckschrift R. Schmidt "Zahlungssysteme für M-Commerce", Funkschau 17/2001, Seiten 20 bis 23 sind ferner eine Vielzahl von unterschiedlichen elektronischen Zahlungsund Vergebührungssystemen insbesondere für den Handel mit mobilen Endgeräten bekannt, wobei auch sogenannte Prepaid-Systeme beschrieben werden, bei denen eine Registrierung des Benutzers entfällt. Alternativ werden auch Zahlungssysteme beschrieben, bei denen eine Registrierung des Benutzers bzw. Endkunden notwendig ist, sowie Mischformen hiervon, wie z.B. Paybox.

Ferner ist aus der Druckschrift WO 01/86598 A1 ein Verfahren zur Realisierung eines elektronischen Zahlungsverkehrs in einem Telekommunikationsnetzwerk bekannt, wobei mittels einer SMS-Kurznachricht eine Zahlungs-Anweisung von einem Handy verschickt und für eine Bezahlung verwendet werden kann. Da als Inhalt eine Zahlungs-Anweisung vergleichbar mit elektronischen Überweisungen bestehend aus wenigstens einer Zahlungs-Zieladresse und einem Überweisungsbetrag übertragen wird, sind eine Vielzahl von Zusatzeinrichtungen im Netzwerk und insbesondere betreiberseitig notwendig, was zu erhöhten Investitionskosten führt.

Demgegenüber liegt der Erfindung die Aufgabe zugrunde, eine Zahlungsplattform für Netzwerkbetreiber und Telekommunikationsendgeräte zur Realisierung eines elektronischen Zahlungsverkehrs sowie zugehörige Verfahren zu schaffen, die besonders einfach und kostengünstig zu realisieren sind. Insbesondere sollen eine zusätzliche Registrierung und aufwendige Modifikationen vermittlungsseitig sowie endgeräteseitig vermieden werden.

Erfindungsgemäß wird diese Aufgabe hinsichtlich der Zahlungsplattform für Netzwerkbetreiber durch die Merkmale des Patentanspruchs 1, hinsichtlich eines zugehörigen Verfahrens durch die Maßnahmen des Patentanspruchs 10, hinsichtlich einer Zahlungsplattform für Telekommunikationsendgeräte durch die Merkmale des Patentanspruchs 19 und hinsichtlich eines zugehörigen Verfahrens durch die Maßnahmen des Patentanspruchs 21 gelöst.

Insbesondere durch die Verwendung einer Zahlungstransfer-Erfassungseinheit, die eine einen Verbindungsaufbau verursachende Teilnehmer-Rufnummer als Zahlungs-Ursprungsadresse und einen Inhalt einer an zumindest eine Service-Rufnummer gesendete Nachricht als Zahlungs-Zieladresse erfasst, und einer Buchungseinheit, die eine Buchung vom Konto der ZahlungsUrsprungsadresse auf das Konto der Zahlungs-Zieladresse in Höhe eines der Service-Rufnummer zugeordneten Buchungswertes durchführt, können bereits existierende Abbuchungssysteme mit minimalem Aufwand derart modifiziert werden, dass zumindest Teilnehmer des gleichen Netzwerkbetreibers auf besonders einfache und kostengünstige Weise untereinander einen elektronischen Zahlungsverkehr durchführen können.

Obwohl vorzugsweise eine Vielzahl von Service-Rufnummern mit einer Vielzahl von Buchungswerten versehen werden können, die Werte vergleichbar mit dem vom Bargeld her bekannten unterschiedlichen Münzen und Geldscheinen aufweisen, können selbstverständlich auch nur einige wenige Service-Rufnummern zur Verfügung gestellt werden, die durch eine entsprechend erhöhte Anzahl von Verbindungsaufbauten und/oder eine entsprechende Verbindungs-Zeitdauer wiederum entsprechende Buchungs- bzw. Überweisungsbeträge festlegen können.

Ferner kann die Buchungseinheit eine Kommissionsbuchung durchführen, die entweder pro Buchung fest oder abhängig von der Höhe des Buchungswertes ist, wodurch beispielsweise einem Netzwerkbetreiber eine entsprechende Vergütung für die Bereitstellung des elektronischen Zahlungsverkehrs gewährt wird.

Ferner kann die Buchungseinheit vor der Buchung eine Verifikations-Nachricht an die den Verbindungsaufbau verursachende Teilnehmer-Rufnummer senden und die Buchung nur dann durchführen, wenn sie eine positive Verifikations-Antwort erhält. Auf diese Weise können versehentlich getätigte Zahlungen bzw. Überweisungen verhindert werden.

Vorzugsweise kann die Buchungsbestätigungs-Nachricht einen maschinenlesbaren Code wie beispielsweise einen eindimensionalen oder zweidimensionalen Barcode aufweisen, der beispielsweise im Telekommunikationsendgerät anzeigbar ist und somit einem Verkäufer zum automatischen Ablesen zur Verfügung gestellt werden kann.

Hinsichtlich des Verfahrens wird zunächst ein Verbindungsaufbau zu einer Service-Rufnummer mit zugeordnetem Buchungswert erfasst, anschließend eine den Verbindungsaufbau verursachende Teilnehmer-Rufnummer erfasst, und abschließend ein Inhalt einer an die Service-Rufnummer gesendeten Nachricht erfasst. Nach Auswerten der den Verbindungsaufbau verursachenden Teilnehmer-Rufnummer als Zahlungs-Ursprungsadresse und des erfassten Inhalts der gesendeten Nachricht als Zahlungs-Zieladresse kann schließlich eine Buchung von der Zahlungs-Ursprungsadresse zur Zahlungs-Zieladresse in Höhe des durch die Service-Rufnummer festgelegten Buchungswertes durchgeführt werden. Somit kann ohne zusätzliche Registrierung und ohne Durchführung von kostenintensiven Neuinvestitionen bzw. Modifikationen der Infrastruktur des Netzwerkbetreibers ein elektronischer Zahlungsverkehr einfach und sicher realisiert werden.

Ferner kann nach dem Auswerten der Zahlungs-Ursprungsadresse und der Zahlungs-Zieladresse auch eine Fehler-Nachricht an die den Verbindungsaufbau verursachende Teilnehmer-Rufnummer gesendet werden, wenn der erfasste Inhalt der Nachricht keine gültige Zahlungs-Zieladresse darstellt. Fehlerhafte Buchungen können dadurch wiederum zuverlässig ausgeschlossen werden.

Obwohl das vorliegende System zur Realisierung eines elektronischen Zahlungsverkehrs zunächst keine Modifikationen auf Seiten der Teilnehmerendgeräte benötigt, können diese trotzdem zur Steigerung einer Benutzerfreundlichkeit insbesondere mit einer Umwandlungseinheit zum Umwandeln des Buchungswertes und der Zahlungs-Zieladresse in eine Verbindungsaufbauvorschrift für zumindest eine vorgegebene Service-Rufnummer erweitert werden. Auf diese Weise können die sich aus einer Vielzahl von Verbindungsaufbauten zusammensetzenden Buchungswerte automatisch vom Telekommunikationsendgerät erzeugt und ein entsprechender Überweisungsvorgang eingeleitet werden.

Wiederum kann die Umwandlungseinheit den Buchungswert in eine Verbindungsaufbauvorschrift zur Realisierung einer Vielzahl von Verbindungsaufbauten und/oder einer Verbindung mit vorbestimmter Zeitdauer an zumindest einer der vorgegebenen Service-Rufnummern umwandeln, wodurch beliebige Buchungswerte realisiert werden können.

In den weiteren Unteransprüchen sind weitere vorteilhafte Ausgestaltungen der Erfindung gekennzeichnet.

Die Erfindung wird nachstehend an Hand eines Ausführungsbeispiels unter Bezugnahme auf die Zeichnungen näher beschrieben.

Es zeigen:
- Figur 1: eine vereinfachte Blockdarstellung eines Telekommunikationssystems zur Realisierung eines elektronischen Zahlungsverkehrs;
- Figur 2: ein vereinfachtes Flussdiagramm zur Veranschaulichung wesentlicher Verfahrensschritte bei der Realisierung eines elektronischen Zahlungsverkehrs für einen Netzwerkbetreiber;
- Figur 3: eine vereinfachte Blockdarstellung eines Telekommunikationsendgerätes zur Realisierung eines elektronischen Zahlungsverkehrs; und
- Figur 4: ein vereinfachtes Flussdiagramm zur Veranschaulichung wesentlicher Verfahrensschritte zur Realisierung eines elektronischen Zahlungsverkehrs in einem Telekommunikationsendgerät.

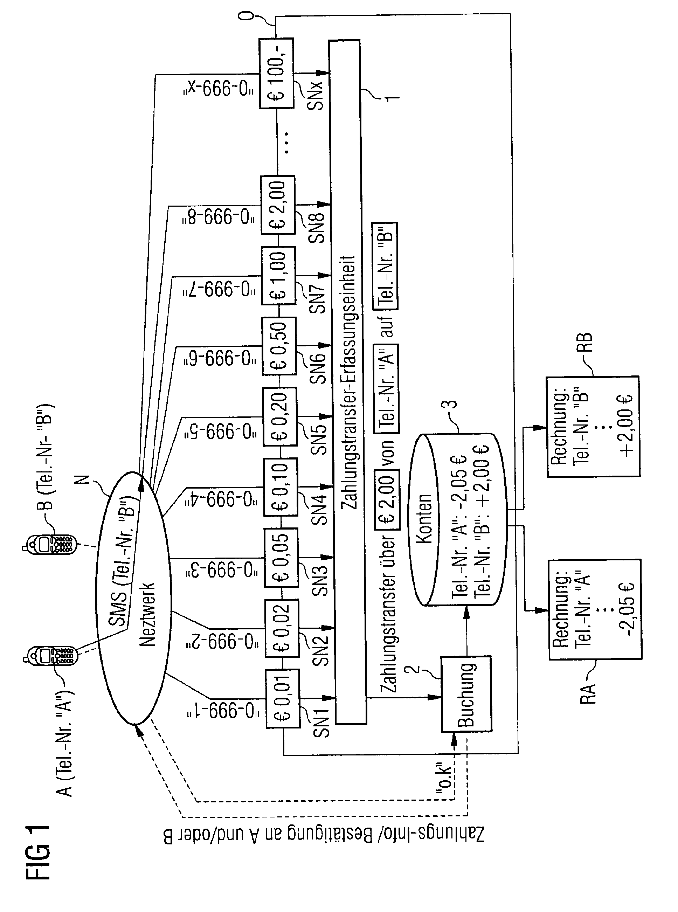

Figur 1 zeigt eine vereinfachte Blockdarstellung eines Telekommunikationssystems zur Realisierung eines elektronischen Zahlungsverkehrs wie es beispielsweise in einem Telekommunikationssystem für mobile Telekommunikationsendgeräte bzw. Handys verwendet werden kann.

Gemäß Figur 1 weist das Telekommunikationssystem ein Telekommunikations-Netzwerk N mit einer Vielzahl von Telekommunikationsendgeräten auf, die beispielsweise mobile Endgeräte bzw. Handys A und B darstellen. Eine jeweilige Teilnehmer-Rufnummer des mobilen Endgerätes A wird beispielsweise mit "TelNrA" und die des Handy's B mit "TelNrB" bezeichnet. Ferner weist ein Netzwerkbetreiber O eine Vielzahl von Service-Rufnummerneinheiten SN1 bis SNx zur Realisierung von sogenannten Service-Rufnummern auf, die beispielsweise eine Vergebührung bzw. Umbuchung in Höhe eines vorbestimmten Betrages für einen anrufenden bzw. den Verbindungsaufbau verursachenden Teilnehmer bzw. eine entsprechende Teilnehmer-Rufnummer ermöglichen.

Erfindungsgemäß werden diesen Service-Rufnummerneinheiten SN1 bis SNx nunmehr beispielsweise die aus dem Bargeld-Zahlungsverkehr bekannten Geldwerte 1 Euro Cent, 2 Euro Cent, 5 Euro Cent, 10 Euro Cent, 20 Euro Cent, 50 Euro Cent, 1 Euro, 2 Euro usw. zugeordnet, wodurch man eine sehr benutzerfreundliche, da bereits aus dem Bargeld-Zahlungsverkehr bekannte, Geld-Struktur zur Verfügung stellt. Ferner ist jeder Service-Rufnummerneinheit eine jeweilige Service-Rufnummer zugeordnet wie beispielsweise 0-999-1, 0-999-2 usw. bis 0-999-x, bei deren Anwahl in üblicher Weise der den Verbindungsaufbau verursachenden Teilnehmer-Rufnummer ein entsprechender Buchungswert von seinem Konto abgezogen wird. Da derartige Systeme bereits im Einsatz sind und insbesondere für eine Vielzahl von Telefondiensten verwendet wird, sind folglich keinerlei Mehraufwendungen bzw. kostspielige Investitionen netzwerkbetreiberseitig notwendig.

Zur Realisierung einer elektronischen Zahlung bzw. zur Überweisung eines Betrages in Höhe von 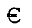 2,00 muss ein Benutzer des Telekommunikationsendgerätes A lediglich beispielsweise eine SMS-Nachricht (Short Message Service) an die Service-Rufnummer 0-999-8 mit dem zugeordneten Buchungswert 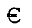 2,000 absetzen, wobei der Inhalt der SMS-Nachricht eine Zahlungs-Zieladresse angibt. Genauer gesagt kann beispielsweise lediglich die Telefonnummer eines begünstigten z.B. des Inhabers des Handy's B mit der Teilnehmer-Rufnummer "TelNrB" eingegeben werden.

Auch diese Möglichkeit besteht bereits in allen Telekommunikationssystemen, weshalb eine kostenintensive Modifikation entfällt.

Zum Erfassen einer realisierten Verbindung bzw. eines realisierten Verbindungsaufbaus zu der zumindest einen Service-Rufnummerneinheit SN1 bis SNx und einer zugehörigen den Verbindungsaufbau verursachenden Teilnehmer-Rufnummer TelNrA weist der Netzwerkbetreiber bzw. Operator O ferner eine Zahlungstransfer-Erfassungseinheit 1 auf, um entsprechende Zahlungstransfers zu realisieren. Ferner besitzt der Netzwerkbetreiber eine Buchungseinheit 2 zum Durchführen einer Buchung in einer Konten-Datenbank 3, die für eine Vielzahl von Teilnehmer-Rufnummern des Netzwerkbetreibers O jeweilige Kontostände in Abhängigkeit von der erfassten Service-Rufnummer und der den Verbindungsaufbau verursachenden Teilnehmer-Rufnummer speichert.

Zur Realisierung des erfindungsgemäßen elektronischen Zahlungsverkehrs ist nunmehr lediglich eine Modifikation der Zahlungstransfer-Erfassungseinheit 1 dahingehend notwendig, dass die den Verbindungsaufbau verursachende Teilnehmer-Rufnummer als Zahlungs-Ursprungsadresse und ein Inhalt einer an die zumindest eine Service-Rufnummer gesendeten Nachricht als Zahlungs-Zieladresse erfasst wird. Die Buchungseinheit 2 kann dann eine Buchung vom Konto der Zahlungs-Ursprungsadresse, d.h. des Teilnehmers des Handy's A auf das Konto der Zahlungs-Zieladresse, d.h. zum Benutzer des Handy's B in Höhe eines der Service-Rufnummer zugeordneten Buchungswertes, d.h. in Höhe von 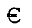 2,00 durchführen. Entsprechend dem üblichen Procedere des Netzwerkbetreibers O kann diese Umbuchung beispielsweise monatlich in Form einer Rechungsstellung RA und RB den Teilnehmern bzw. Benutzern der Handies A und B mitgeteilt werden.

Damit auch für den Netzwerkbetreiber O für diesen zusätzlichen Dienst eine gewisse Vergütung ermöglicht wird, kann darüber hinaus eine Kommissionsbuchung im Beispiel von z.B. 0,05 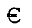 gebucht werden, d.h. dem Konto des Benutzers des Handy's A aufgeschlagen werden. Daraus ergibt sich eine Abrechnung für das Handy A bzw. für die Teilnehmer-Rufnummer TelNrA für diesen Zahlungsvorgang von -2,05 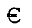 und eine Gutschrift auf der Rechnung des Besitzers für das Handy B bzw. für die Teilnehmer-Rufnummer TelNrB von +2,00 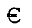 . Obwohl die Kommissionsbuchung vorzugsweise pro Buchung fest ist, kann sie auch eine monatliche Pauschale aufweisen oder abhängig von der Höhe des Buchungswertes beispielsweise prozentual oder durch andere Methoden festgelegt werden.

Zur Vermeidung von Fehlbuchungen und zur Signalisierung von getätigten Buchungen kann die Buchungseinheit 2 ferner sogenannte Verifikations-Nachrichten und/oder Buchungsbestätigungs-Nachrichten vorzugsweise an die Teilnehmer-Rufnummern des Buchungsvorgangs absenden. Genauer gesagt kann die Buchungseinheit 2 beispielsweise vor jeder Buchung eine Verifikations-Nachricht an die den Verbindungsaufbau verursachende Teilnehmer-Rufnummer TelNrA absenden, wobei die Buchung nur dann durchgeführt wird, wenn der Benutzer des Handy's A eine positive Verifikations-Antwort "ok" sendet, d.h. wenn die Buchungseinheit 2 eine entsprechende positive Verifikations-Antwort von der den Verbindungsaufbau verursachenden Teilnehmer-Rufnummer erhält. Auf diese Weise können irrtümliche oder versehentlich durchgeführte Zahlungen zuverlässig verhindert werden.

In gleicher Weise können nach erfolgreich durchgeführter Buchung von der Buchungseinheit 2 sogenannte Buchungsbestätigungs-Nachrichten vorzugsweise an die den Verbindungsaufbau verursachende Teilnehmer-Rufnummer und/oder an die Teilnehmer-Rufnummer der Zahlungs-Zieladresse gesendet werden, wodurch für den Fall eines Kaufgeschäftes für Waren oder Dienstleistungen der Verkäufer nach erfolgter Buchung eine Ware freigegeben bzw. verschicken oder eine Dienstleistung erbringen kann. Für ein Kaufgeschäft in einem Laden bedeutet dies beispielsweise, dass ein Käufer bzw. der Besitzer des Handy's A zur Zahlung eines Gegenstandes mit dem Wert von 2,00 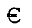 die vorstehend beschriebene Zahlung entsprechend durchführt und als Buchungsbestätigungs-Nachricht von der Buchungseinheit 2 beispielsweise einen maschinenlesbaren Code auf sein Handy übertragen bekommt, den er dem Verkäufer anschließend sofort zeigen kann und somit die Freigabe der Ware bewirkt.

Vorzugsweise können hierbei eindimensionale oder zweidimensionale Barcodes oder lediglich beliebig lange Integer-Zahlenreihen als Buchungsbestätigungs-Nachrichten übertragen werden, die von einem Verkäufer beispielsweise automatisch über Barcodeleser ausgewertet werden können.

In gleicher Weise sind auch Zahlungen im Internet denkbar, wobei beispielsweise nach dem Senden der Buchungsbestätigungs-Nachricht diese Nachricht in ein vorgegebenes Zahlungsfeld auf der Internet-Shop-Seite eingetragen wird, um daraufhin die Ware zu erhalten.

Obwohl im Ausführungsbeispiel gemäß Figur 1 die Service-Rufnummerneinheiten bzw. die zugehörigen Service-Rufnummern Buchungswerte aufweisen, wie sie aus dem Bargeld-Zahlungsverkehr bekannt sind, können auch alternative Buchungswerte und insbesondere alternative Realisierungsmöglichkeiten zum Bestimmen der Buchungswerte durchgeführt werden. Demzufolge kann der Buchungswert ferner durch eine Verbindungsanzahl und/oder eine Verbindungs-Zeitdauer zu einer Service-Rufnummer festgelegt werden, wobei selbstverständlich zur Bestimmung eines jeweiligen Überweisungsbetrages ein Benutzer eine jeweilige Zeitdauer oder eine jeweilige Anzahl von Verbindungsaufbauten genau festlegen muss.

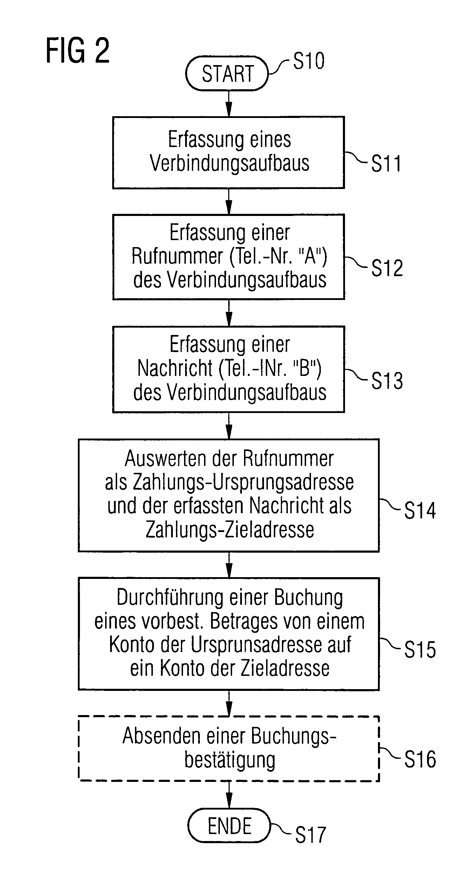

Figur 2 zeigt ein vereinfachtes Flussdiagramm zur Veranschaulichung wesentlicher Verfahrensschritte bei der Realisierung eines elektronischen Zahlungsverkehrs auf Seiten eines Netzwerkbetreibers.

Nach einem Start im Schritt S10 wird zunächst ein Verbindungsaufbau zu zumindest einer Service-Rufnummer SN1 bis SNx mit zugeordneten Buchungswerten wie z.B. Euro 0,01 bis Euro 100 in einem Schritt S11 erfasst. Ferner wird in einem Schritt S12 eine den Verbindungsaufbau verursachende Teilnehmer-Rufnummer beispielsweise die Rufnummer des Handy's A durch die während der Signalisierung übermittelten Signalisierungs-Daten erfasst. In einem Schritt S13 wird ferner ein Inhalt einer an die jeweilige Service-Rufnummer gesendeten Nachricht erfasst.

Anschließend wird in einem Schritt S14 die den Verbindungsaufbau verursachende Teilnehmer-Rufnummer "TelNrA" als Zahlungs-Ursprungsadresse und der erfasste Inhalt "TelNrB" der gesendeten Nachricht als Zahlungs-Zieladresse ausgewertet. Auf der Grundlage dieser ausgewerteten Zahlungs-Ursprungsadresse und der Zahlungs-Zieladresse wird nunmehr in einem Schritt S15 eine Buchung in Höhe des durch die Service-Rufnummer festgelegten Buchungswertes z.B. 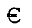 2,00 vom Konto der Zahlungs-Ursprungsadresse auf das Konto der Zahlungs-Zieladresse durchgeführt, wonach das Verfahren in einem Schritt S 17 abgeschlossen werden kann.

Optional kann das Verfahren ferner einen Schritt S16 aufweisen, bei dem eine Buchungsbestätigungs-Nachricht an die den Verbindungsaufbau verursachende Telefon-Rufnummer und/oder an die der Zahlungs-Zieladresse zugeordnete Teilnehmer-Rufnummer gesendet wird.

Wiederum kann auch in dem Verfahren der Buchungswert ferner von einer Anzahl und/oder einer Zeitdauer einer Verbindung bzw. eines Verbindungsaufbaus zu der jeweiligen Service-Rufnummer festgelegt werden.

Zur Vermeidung von Fehlbuchungen kann wiederum vorzugsweise vor dem Schritt S15 eine Verifikations-Nachricht an die den Verbindungsaufbau verursachende Teilnehmer-Rufnummer gesendet werden und eine Abfrage hinsichtlich einer positiven empfangenen Verifikations-Antwort durchgeführt werden, wobei nur für eine positive Verifikation durch die Teilnehmer-Rufnummer des Handy's A eine Buchung bzw. Überweisung eines jeweiligen Betrages durchgeführt wird.

Auch zur Realisierung einer sogenannten Kommissionsbuchung zugunsten eines Netzwerkbetreibers können entsprechende (nicht dargestellte) zusätzliche Verfahrensschritte durchgeführt werden, wobei insbesondere eine sogenannte "flat fee" bzw. feste Kommission oder eine z.B. prozentual vom Betrag abhängige Kommission vorzugsweise vom Konto der die Verbindungsaufbauten verursachenden Teilnehmer-Rufnummer abgebucht wird.

Ferner kann das Verfahren in einer (nicht dargestellten) Fehlerbehandlung eine Fehler-Nachricht an die den Verbindungsaufbau verursachende Teilnehmer-Rufnummer vorzugsweise nach dem Schritt S14 absetzen, wenn der erfasste Inhalt der Nachricht keine gültige d.h. dem Netzwerkbetreiber bekannte Zahlungs-Zieladresse darstellt.

Auf diese Weise erhält man eine Zahlungsplattform für Netzwerkbetreiber zur Realisierung eines elektronischen Zahlungsverkehrs, die mit minimalen Kosten und insbesondere ohne erneute Registrierung bei jeweiligen kontoführenden Instituten durchgeführt werden kann.

Obwohl die vorliegende Erfindung bereits mit jedem herkömmlichen Telekommunikationsendgerät realisierbar ist, kann auch eine Benutzerfreundlichkeit auf Seiten der Teilnehmerendgeräte weiter verbessert werden.

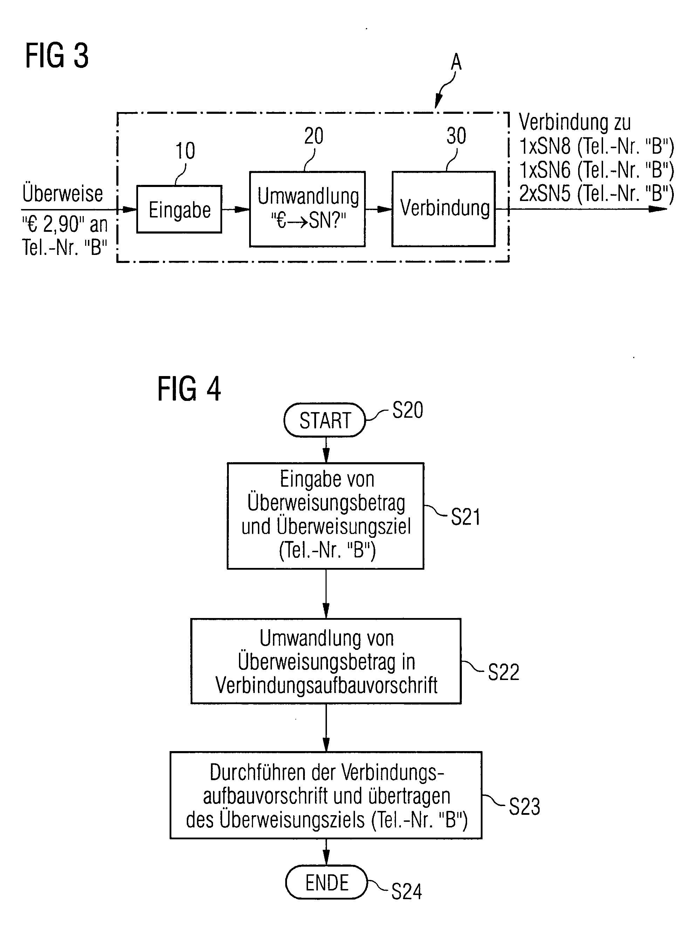

Figur 3 zeigt eine vereinfachte Blockdarstellung eines Telekommunikationsendgerätes wie beispielsweise eines mobilen Endgerätes bzw. Handy's A, welches im Wesentlichen eine Eingabeeinheit 10 zum Eingeben eines zu überweisenden Buchungswertes und einer zugehörigen Zahlungs-Zieladresse aufweist sowie eine Verbindungsaufbaueinheit 30 zum Aufbauen von zumindest einer Verbindung zu den in Figur 1 dargestellten Service-Rufnummerneinheiten SN1 bis SNx bzw. zugehörigen Service-Rufnummern und zum Übertragen einer eine Zahlungs-Zieladresse enthaltenden Nachricht.

Im einfachsten Fall könnte demzufolge jedes herkömmliche Handy A unter Absendung einer SMS-Nachricht mit dem Inhalt einer als Zahlungs-Zieladresse definierten Telefonnummer an eine jeweilige einen Buchungswert festlegende Service-Rufnummer eine entsprechende Überweisung veranlassen. Da jedoch bei einer Vielzahl von zu tätigenden Zahlungen die gewünschten Buchungswerte von den den Service-Rufnummern zugeordneten vorhandenen Buchungswerten abweichen, wird oftmals eine wiederholte Anwahl von verschiedenen Service-Rufnummern notwendig sein. Zur Vereinfachung eines entsprechenden Procederes kann daher ein jeweiliges Telekommunikationsendgerät zusätzlich eine Umwandlungseinheit 20 zum Umwandeln des zu überweisenden Buchungswertes und gegebenenfalls einer Zahlungs-Zieladresse in eine Verbindungsaufbauvorschrift für zumindest eine vorgegebene Service-Rufnummer umgewandelt werden. Genauer gesagt kann beispielsweise an der Eingabeeinheit des Handy's A lediglich der Überweisungsbetrag von 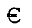 2,90 an den Namen des Begünstigten eingegeben werden, wobei die Umwandlungseinheit beispielsweise aus einer Adressdatenbank eine zugehörige Teilnehmer-Rufnummer des Begünstigten auswählt und als Inhalt einer bzw. mehrerer zu verschickender Nachrichten verwendet. Ferner wird der zu überweisende Betrag in Abhängigkeit von den zur Verfügung stehenden Service-Rufnummern und ihren zugehörigen Zahlenwerten in eine entsprechende Vielzahl von Verbindungsaufbauten umgewandelt, wodurch sich beispielsweise bei Verwendung der in Figur 1 dargestellten Service-Rufnummern eine Verbindungsaufbauvorschrift ergibt, die daraus besteht, dass die Service-Rufnummerneinheit SN8 einmal (1 x 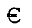 2,00), die Service-Rufnummerneinheit SN6 einmal (1 x 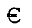 0,50) und die Service-Rufnummerneinheit SN5 zweimal (2 x 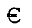 0,20) mit dem Nachrichten-Inhalt "TelNrB" angewählt wird, wodurch der gewünschte Überweisungsbetrag von 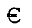 2,90 auf das Konto des Besitzers mit der Teilnehmer-Rufnummer TelNrB übertragen wird.

Da die Buchungswerte auch durch eine Vielzahl von Verbindungsaufbauten an eine gleiche Service-Rufnummer und/oder eine vorbestimmte Zeitdauer einer Verbindung an eine vorgegebene Service-Rufnummer realisiert werden können, kann die Umwandlungseinheit 20 auch entsprechende Verbindungsaufbauvorschriften mit unterschiedlichen Zeitdauern und/oder Anzahl von Verbindungsaufbauten bereitstellen.

Figur 4 zeigt ein vereinfachtes Flussdiagramm zur Veranschaulichung wesentlicher Verfahrensschritte bei der Realisierung des Verfahrens in einem Telekommunikationsendgerät, wobei nach einem Start im Schritt S20 zunächst im Schritt S21 die zu überweisenden Buchungswerte und eine zugehörige Zahlungs-Zieladresse eingegeben werden. Nach der Umwandlung des Buchungswertes und der Zahlungs-Zieladresse in eine Verbindungsaufbauvorschrift für zumindest eine vorgegebene Service-Rufnummer im Schritt S22 können abschließend in Abhängigkeit von der Verbindungsaufbauvorschrift jeweilige Verbindungen zu der zumindest einen Service-Rufnummer aufgebaut werden und jeweils eine die Zahlungs-Zieladresse enthaltende Nachricht übertragen werden.

Zur Realisierung der vorstehend beschriebenen Verifikations-Nachrichten kann darüber hinaus jedes Teilnehmerendgerät bzw. Handy A entsprechende Nachrichten absetzen, wodurch eine Buchung endgültig durchgeführt wird. Insbesondere bei Verwendung von SMS-Nachrichten können auch die Buchungsbestätigungs-Nachrichten ohne zusätzlichen Mehraufwand bzw. zusätzliche Modifikationen angezeigt und weitergegeben werden.

Auf diese Weise können mit minimalem Aufwand herkömmliche Telekommunikationsendgeräte derart modifiziert werden, dass sich eine besonders benutzerfreundliche Realisierung von elektronischem Zahlungsverkehr ergibt.

Obwohl die vorliegende Erfindung vorstehend an Hand eines drahtlosen Telekommunikations-Netzwerks beschrieben wurde, ist sie grundsätzlich nicht darauf beschränkt, sondern umfasst in gleicher Weise auch drahtgebundene Telekommunikations-Netzwerke. In gleicher Weise können neben den vorstehend beschriebenen Handys demzufolge auch sogenannte DECT-Endgeräte oder sonstige drahtgebundene Telekommunikationsendgeräte wie beispielsweise ISDN-Telefone, PCs, PDA usw. verwendet werden.

Obwohl die Erfindung vorstehend an Hand von SMS-Nachrichten als die Zahlungs-Zieladresse übertragenden Nachrichten beschrieben wurde, ist sie nicht darauf beschränkt, sondern umfasst in gleicher Weise auch andere Nachrichtenübertragungsformate, in denen beliebige Inhalte weitergeleitet werden können. Insbesondere ist hierbei an sogenannte IVR-Nachrichten (Interactive Voice Response) zu denken.

Obwohl im vorstehenden Ausführungsbeispiel lediglich eine elektronische Zahlung innerhalb eines Netzwerkbetreibers beschrieben wurde, können Zahlungen grundsätzlich auch zwischen Teilnehmern von unterschiedlichen Netzwerkbetreibern realisiert werden.

### Bezugszeichenliste

- 1: Zahlungstransfer-Erfassungseinheit
- 2: Buchungseinheit
- 3: Konten-Datenbank
- 10: Eingabeeinheit
- 20: Umwandlungseinheit
- 30: Verbindungseinheit
- A, B: Telekommunikationsendgeräte
- SN1 bis SNx: Service-Rufnummerneinheiten
- N: Telekommunikations-Netzwerk
- O: Netzwerkbetreiber
- RA, RB: Rechnungsstellung an A, B
- S10 bis S17: Verfahrensschritte für Netzwerkbetreiber
- S20 bis S24: Verfahrensschritte für Telekommunikationsendgerät

## Patentansprüche

1. Zahlungsplattform für Netzwerkbetreiber zur Realisierung eines elektronischen Zahlungsverkehrs mit
zumindest einer Service-Rufnummerneinheit (SN1 bis SNx) zur Realisierung einer Service-Rufnummer, bei deren Anwahl ein Zahlungstransfer veranlasst wird;
einer Zahlungstransfer-Erfassungseinheit (1) zum Erfassen einer realisierten Verbindung zu der zumindest einen Service-Rufnummer und einer zugehörigen einen Verbindungsaufbau verursachenden Teilnehmer-Rufnummer (TelNrA);
einer Konten-Datenbank (3) zum Speichern von Kontoständen für eine Vielzahl von Teilnehmer-Rufnummern des Netzwerkbetreibers; und
einer Buchungseinheit (2) zum Durchführen einer Buchung in der Konten-Datenbank (3) in Abhängigkeit von der erfassten Service-Rufnummer und der den Verbindungsaufbau verursachenden Teilnehmer-Rufnummer, **dadurch gekennzeichnet, dass**
die Zahlungstransfer-Erfassungseinheit (1) die den Verbindungsaufbau verursachende Teilnehmer-Rufnummer (TelNrA) als Zahlungs-Ursprungsadresse und einen Inhalt (TelNrB) einer an die zumindest eine Service-Rufnummer (SN1 bis SNx) gesendeten Nachricht (SMS) als Zahlungs-Zieladresse erfasst und
die Buchungseinheit (2) eine Buchung vom Konto der Zahlungs-Ursprungsadresse auf das Konto der Zahlungs-Zieladresse in Höhe eines der Service-Rufnummer zugeordneten Buchungswertes durchführt.

2. Zahlungsplattform nach Patentanspruch 1, **dadurch gekennzeichnet, dass** der Buchungswert ferner durch eine Verbindungs-Anzahl und/oder eine Verbindungs-Zeitdauer festgelegt ist.

3. Zahlungsplattform nach Patentanspruch 1 oder 2, **dadurch gekennzeichnet, dass** die Buchungseinheit (2) ferner eine Kommissionsbuchung durchführt.

4. Zahlungsplattform nach Patentanspruch 3, **dadurch gekennzeichnet, dass** die Kommissionsbuchung pro Buchung fest oder abhängig von der Höhe des Buchungswertes ist.

5. Zahlungsplattform nach einem der Patentansprüche 1 bis 4, **dadurch gekennzeichnet, dass** die Buchungseinheit (2) vor der Buchung eine Verifikations-Nachricht an die den Verbindungsaufbau verursachende Teilnehmer-Rufnummer (TelNrA) sendet und die Buchung nur durchführt, wenn sie eine positive Verifikations-Antwort (ok) erhält.

6. Zahlungsplattform nach einem der Patentansprüche 1 bis 5, **dadurch gekennzeichnet, dass** die Buchungseinheit (2) nach der Buchung eine Buchungsbestätigungs-Nachricht an die den Verbindungsaufbau verursachende Teilnehmer-Rufnummer (TelNrA) und/oder an die Teilnehmer-Rufnummer (TelNrB) der Zahlungs-Zieladresse sendet.

7. Zahlungsplattform nach Patentanspruch 6, **dadurch gekennzeichnet, dass** die Buchungsbestätigungs-Nachricht einen maschinenlesbaren Code darstellt.

8. Zahlungsplattform nach einem der Patentansprüche 1 bis 7, **dadurch gekennzeichnet, dass** sie in einem drahtlosen und/oder drahtgebundenen Telekommunikations-Netzwerk realisiert ist.

9. Zahlungsplattform nach einem der Patentansprüche 1 bis 8, **dadurch gekennzeichnet, dass** die der Service-Rufnummer gesendete Nachricht eine SMS-Nachricht oder IVR-Nachricht darstellt.

10. Verfahren zur Realisierung eines elektronischen Zahlungsverkehrs mit den Schritten:
a) Erfassen eines Verbindungsaufbaus zu zumindest einer Service-Rufnummerneinheit mit zugeordneter Service-Rufnummer und zugeordnetem Buchungswert (S11);
b) Erfassen einer den Verbindungsaufbau verursachenden Teilnehmer-Rufnummer (S12);
c) Erfassen eines Inhalts einer an die Service-Rufnummer gesendeten Nachricht (S13);
d) Auswerten der den Verbindungsaufbau verursachenden Teilnehmer-Rufnummer als Zahlungs-Ursprungsadresse und des erfassten Inhalts als Zahlungs-Zieladresse (S14); und
e) Durchführen einer Buchung von einem Konto der Zahlungs-Ursprungsadresse zu einem Konto der Zahlungs-Zieladresse in Höhe des durch die Service-Rufnummer festgelegten Buchungswertes (S15).

11. Verfahren nach Patentanspruch 10, **dadurch gekennzeichnet, dass** in Schritt e) der Buchungswert ferner von einer Anzahl und/oder einer Zeitdauer einer Verbindung zu der Service-Rufnummer festgelegt wird.

12. Verfahren nach Patentanspruch 10 oder 11, **dadurch gekennzeichnet, dass** in Schritt e) ferner eine Kommissionsbuchung zugunsten eines Netzwerkbetreibers durchgeführt wird.

13. Verfahren nach Patentanspruch 12, **dadurch gekennzeichnet, dass** die Kommissionsbuchung pro Buchung fest oder abhängig von der Höhe des Buchungswertes ist.

14. Verfahren nach einem der Patentansprüche 10 bis 13, **dadurch gekennzeichnet, dass** vor Schritt e) eine Verifikations-Nachricht an die den Verbindungsaufbau verursachende Teilnehmer-Rufnummer (TelNrA) gesendet wird und die Buchung nur durchgeführt wird, wenn eine positive Verifikations-Antwort (ok) empfangen wird.

15. Verfahren nach einem de Patentansprüche 10 bis 14, **gekennzeichnet durch** den weiteren Schritt
f) Senden einer Buchungsbestätigungs-Nachricht an die den Verbindungsaufbau verursachende Teilnehmer-Rufnummer und/oder an eine der Zahlungs-Zieladresse zugeordnete Teilnehmer-Rufnummer.

16. Verfahren nach Patentanspruch 15, **dadurch gekennzeichnet, dass** die Buchungsbestätigungs-Nachricht einen maschinenlesbaren Code darstellt.

17. Verfahren nach einem der Patentansprüche 10 bis 16, **dadurch gekennzeichnet, dass** die der Service-Rufnummer gesendete Nachricht eine SMS-Nachricht oder IVR-Nachricht darstellt.

18. Verfahren nach einem der Patentansprüche 10 bis 17, **dadurch gekennzeichnet, dass** nach dem Auswerten in Schritt d) eine Fehler-Nachricht an die den Verbindungsaufbau verursachende Teilnehmer-Rufnummer gesendet wird, wenn der erfasste Inhalt der Nachricht keine gültige Zahlungs-Zieladresse darstellt.

19. Zahlungsplattform für Telekommunikationsendgeräte zur Realisierung eines elektronischen Zahlungsverkehrs mit einer Eingabeeinheit (10) zum Eingeben eines zu überweisenden Buchungswertes und einer zugehörigen Zahlungs-Zieladresse; einer Umwandlungseinheit (20) zum Umwandeln des Buchungswertes und der Zahlungs-Zieladresse in eine Verbindungsaufbauvorschrift für zumindest eine vorgegebene Service-Rufnummer; und einer Verbindungsaufbaueinheit (30) zum Aufbauen von zumindest einer Verbindung zu der zumindest einen vorgegebenen Service-Rufnummer und zum Übertragen einer die Zahlungs-Zieladresse enthaltenden Nachricht in Abhängigkeit von der Verbindungsaufbauvorschrift.

20. Zahlungsplattform nach Patentanspruch 19, **dadurch gekennzeichnet, dass** die Umwandlungseinheit (20) den Buchungswert in eine Verbindungsaufbauvorschrift zur Realisierung einer Vielzahl von Verbindungsaufbauten und/oder einer Verbindung mit vorbestimmter Zeitdauer an zumindest eine der vorgegebenen Service-Rufnummern umwandelt.

21. Verfahren zur Realisierung eines elektronischen Zahlungsverkehrs mittels eines Telekommunikationsendgerätes mit den Schritten:
a) Eingeben eines zu überweisenden Buchungswertes und einer zugehörigen Zahlungs-Zieladresse (S21);
b) Umwandeln des Buchungswertes und der Zahlungs-Zieladresse in eine Verbindungsaufbauvorschrift für zumindest eine vorgegebene Service-Rufnummer (S22); und
c) Aufbauen von zumindest einer Verbindung zu der zumindest einen Service-Rufnummer und Übertragen einer die Zahlungs-Zieladresse enthaltenden Nachricht in Abhängigkeit von der Verbindungsaufbauvorschrift.

22. Verfahren nach Patentanspruch 21, **dadurch gekennzeichnet, dass** in Schritt b) die Umwandlungseinheit (20) den Buchungswert in eine Verbindungsaufbauvorschrift zur Realisierung einer Vielzahl von Verbindungsaufbauten und/oder einer Verbindung mit vorbestimmter Zeitdauer an zumindest eine der vorgegebenen Service-Rufnummern umwandelt.
